# DEMANDE DE BREVET EUROPEEN

(11) **EP 0 614 788 A1**
(43) Date de publication de la demande: **14.09.1994**
(21) Numéro de dépôt: 93440074.8
(22) Date de dépôt: 09.09.1993
(51) Int. Cl.: B60R 22/02

(54) **Dispositif destiné à constituer une ceinture de sécurité supplémentaire pour la banquette arrière d'un véhicule équipée de seulement deux ceintures de sécurité**

(30) Priorité: 10.03.1993 EP 93440027
(71) Demandeur: Torzuoli, Claude, F-34300 Agde (FR)
(72) Inventeur: Torzuoli, Claude, F-34300 Agde (FR)
(74) Mandataire: Dénoyez, Hubert

(57) **Abrégé**

Une ceinture de sécurité amovible (5) est munie à chacune de ses extrémités de moyens de solidarisation avec les fiches, mâles ou femelles, dont sont munies les deux ceintures de sécurité (2,3) installées sur la banquette arrière d'un véhicule.

La ceinture est munie à chacune de ses extrémités d'une fiche femelle permettant sa solidarisation aux fiches mâles (22,32) des ceintures (2,3), ou alors elle comporte à chacune de ses extrémités une fiche femelle (51,53) reliée à une fiche mâle (50,52), les fiches mâles (50,52) étant destinées à être solidarisées aux fiches femelles (23,33) des ceintures (2,3) et les fiches femelles (51,53) à être solidarisées aux fiches mâles (22,32) des ceintures (2,3).

## Description

La présente invention a pour objet un dispositif permettant d'attacher sur la banquette arrière d'un véhicule automobile un troisième passager alors que ladite banquette n'est équipée que de deux ceintures de sécurité.

Dans de nombreux pays, la réglementation oblige le port de la ceinture de sécurité non seulement pour les passagers avant mais aussi pour les passagers arrière.

Or, si la plupart des véhicules sont d'une habitabilité permettant à trois personnes de s'installer sur la banquette arrière, ces véhicules ne comportent généralement que deux ceintures de sécurité à l'arrière.

Il est bien entendu possible d'adapter après coup une troisième ceinture sur la banquette arrière, mais cette installation est coûteuse.

La présente invention permet de remédier à cet inconvénient en proposant une troisième ceinture amovible dont l'installation s'effectue rapidement et ne nécessite aucune transformation du véhicule, sous réserve que ledit véhicule comporte deux ceintures, à enrouleur ou non, à trois points d'attache chacune, à savoir deux points d'attaches latéraux fixes et un point d'attache central amovible.

Ledit point d'attache central est généralement constitué d'une fiche mâle solidaire de la ceinture proprement dite, et d'une fiche femelle solidaire du châssis du véhicule émergeant entre l'assise et le dossier de la banquette. Généralement la fiche femelle de la ceinture de droite est à une certaine distance de celle de la ceinture de gauche, afin de préserver le confort de l'éventuel troisième passager arrière, cet espace permettant également l'abaissement d'un accoudoir central escamotable.

Le dispositif objet de la présente invention consiste en une ceinture complètement amovible que l'on fixe sur les points d'attache existants.

Selon un premier mode de réalisation, cette ceinture amovible comporte à ses extrémités deux fiches femelles, dans chacune desquelles s'encliquette la fiche mâle de chacune des ceintures installées dans le véhicule.

De la sorte, une fois assemblées, ces ceintures n'en forment plus qu'une seule, dont le réglage de la longueur s'effectue automatiquement pour les ceintures équipées d'enrouleurs, et manuellement pour les autres.

Selon un second mode de réalisation, la ceinture amovible, qui est réglable en longueur de façon classique, comporte à chacune de ses extrémités deux fiches, une mâle et une femelle.

Les fiches mâles sont destinées à être encliquetées dans les fiches femelles solidaires du châssis du véhicule, permettant ainsi de ceindre le passager central, les fiches femelles étant destinées à recevoir les fiches mâles des ceintures droite et gauche.

Ce second mode de réalisation peut être également utilisé comme le premier, il suffit à cet effet de ne pas se servir des fiches femelles solidaires du châssis du véhicule.

Il convient de noter que le dispositif selon l'nvention permet également de maintenir sur la banquette arrière des objets encombrants à transporter.

Dans le cas d'objets volumineux mais légers, donc peu aptes à bloquer l'enrouleur, il est possible de limiter le déroulement des ceintures au moyen de pinces adaptées que l'on trouve dans le commerce, qui se fixent chacune sur une ceinture au niveau de la fiche mâle, empêchant celle-ci de coulisser, maintenant en tension les brins inférieurs desdites ceintures.

Les avantages et les caractéristiques de la présente invention ressortiront plus clairement de la description qui suit et qui se rapporte au dessin annexé, lequel en représente un mode de réalisation non limitatif.

Dans le dessin annexé :
- la figure 1 représente une vue schématique d'un premier mode de réalisation du dispositif selon l'invention installé dans un véhicule.
- la figure 2 représente une vue en perspective d'un second mode de réalisation du dispositif selon l'invention, en cours d'installation dans un véhicule.

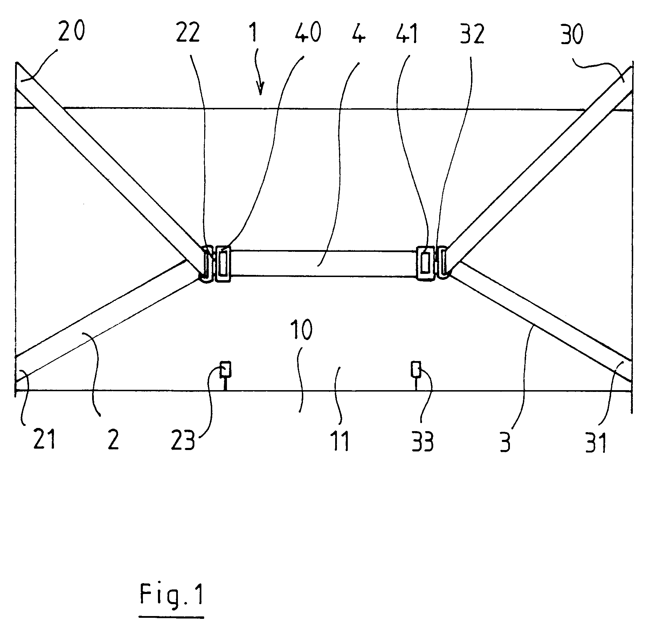

Si on se réfère à la figure 1 on peut voir une banquette arrière 1 d'un véhicule automobile comprenant deux ceintures , une ceinture droite 2 et une ceinture gauche 3.

Ces ceintures 2 et 3 sont des ceintures trois points, à savoir deux points fixes, 20 et 21 pour la ceinture droite 2 et 30 et 31 pour la ceinture gauche 3, solidaires du châssis du véhicule, et un troisième point amovible constitué d'une fiche mâle, respectivement 22 et 32.

Les fiches mâles 22 et 32 sont destinées à être encliquetées respectivement dans des fiches femelles 23 et 33 solidaires du châssis du véhicule et émergeant d'entre l'assise 10 et le dossier 11 de la banquette arrière 1.

Selon un premier mode de réalisation le dispositif objet de l'invention consiste en une ceinture 4 comprenant à l'une de ses extrémités une fiche femelle 40 et à l'autre une fiche femelle 41.

En utilisation la fiche mâle 22 de la ceinture droite 2 est encliquetée dans la fiche femelle 40 de la ceinture 4, et la fiche mâle 32 de la ceinture gauche 3 dans la fiche femelle 41.

Ainsi les ceintures 2, 3 et 4 n'en font plus qu'une et permettent de retenir au moins trois personnes, ou un objet volumineux, sur la banquette arrière 1, et cela de manière facile et rapide.

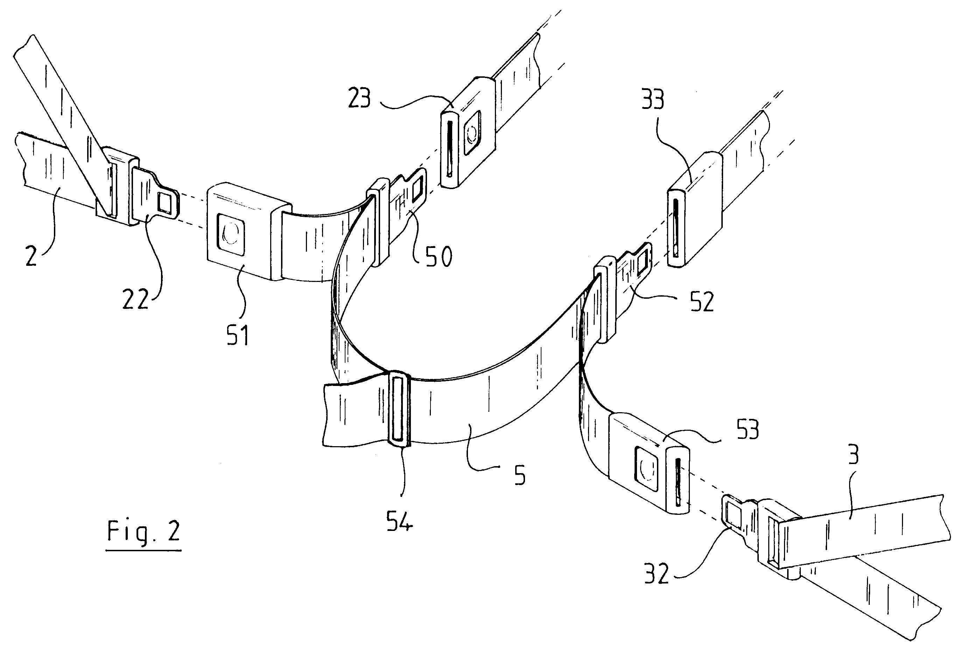

Si on se réfère maintenant à la figure 2 on peut voir que selon un second mode de réalisation du dispositif selon l'invention, celui-ci comporte une ceinture 5, réglable en longueur, comprenant à l'une de ses extrémités une fiche mâle 50 à laquelle est solidarisée une fiche femelle 51, et à l'autre extrémité une fiche mâle 52 à laquelle est solidarisée une fiche femelle 53.

Les fiches mâles 50 et 52 sont destinées à être encliquetées dans les fiches femelles, respectivement 23 et 33, solidaires du châssis du véhicule et émergeant d'entre l'assise et le dossier de la banquette, réalisant ainsi une ceinture ventrale pour un passager arrière central.

Les passagers arrières latéraux sont attachés par les ceintures droite et gauche, la fiche mâle 22 de la ceinture droite 2 étant encliquetée dans la fiche femelle 51 solidaire de la fiche mâle 50 de la ceinture 5, et la fiche mâle 32 de la ceinture gauche 3 étant encliquetée dans la fiche femelle 53 solidaire de la fiche mâle 52 de la ceinture 5.

Ce dispositif permet de ceindre indépendamment les trois passagers arrière, mais il permet également, à l'instar de la ceinture 4, d'attacher un objet volumineux sur la banquette arrière, en s'abstenant d'utiliser l'une ou l'autre, ou les deux, fiches mâles 50 et 52.

Le réglage en longueur de la ceinture 5 peut être réalisé au moyen d'une boucle 54, ou au moyen d'un dispositif connu en soi, au niveau de l'une ou l'autre des fiches mâles 50 et 52.

Il va de soi que la présente invention ne saurait être limitée à la description qui précède de certains de ses modes de réalisation, susceptibles de subir un certain nombre de modifications sans pour autant sortir du cadre de l'invention.

## Revendications

1. Dispositif destiné à constituer une ceinture de sécurité supplémentaire pour la banquette arrière d'un véhicule automobile équipée de seulement deux ceintures de sécurité, caractérisé en ce qu'il consiste en une ceinture amovible (4, 5) munie à chacune de ses extrémités de moyens de solidarisation avec les fiches, mâles ou femelles, dont sont munies les deux ceintures de sécurité (2, 3) installées dans le véhicule.

2. Dispositif selon la revendication 1, caractérisé en ce que la ceinture (4) est munie à chacune de ses extrémités d'une fiche femelle (40, 41) permettant sa solidarisation aux fiches mâles (22, 32) des ceintures (2, 3).

3. Dispositif selon la revendication 1 caractérisé en ce que la ceinture (5) comporte à chacune de ses extrémités une fiche femelle (51, 53) reliée à une fiche mâle (50, 52), les fiches mâles (50, 52) étant destinées à être solidarisées aux fiches femelles (23, 33) des ceintures (2, 3), tandis que les fiches femelles (51, 53) sont destinées à être solidarisées aux fiches mâles (22, 32) desdites ceintures (2, 3).

4. Dispositif selon la revendication 3, caractérisé en ce que le réglage en longueur de la ceinture (5) s'opère au moyen d'une boucle (54).
